# EUROPÄISCHE PATENTSCHRIFT

(11) **EP 1 212 639 B1**
(45) Veröffentlichungstag und Bekanntmachung des Hinweises auf die Patenterteilung: **29.10.2003**
(21) Anmeldenummer: 00960357.2
(22) Anmeldetag: 23.08.2000
(51) Int. Cl.: G02B 1/00

(54) **BILDVERARBEITUNG FÜR ABBILDUNGSSYSTEM MIT KEGELFLÄCHENPROJEKTION**
IMAGE PROCESSING FOR AN IMAGING SYSTEM WITH CONE SURFACE PROJECTION
TRAITEMENT D'IMAGES POUR UN SYSTEME D'IMAGERIE UTILISANT UNE SURFACE CONIQUE

(30) Priorität: 01.09.1999 DE 19941733
(43) Veröffentlichungstag der Anmeldung: 12.06.2002
(73) Patentinhaber: Geometrie Concern Verwaltungs- und Beteiligungsgesellschaft mbH, 97232 Giebelstadt (DE)
(72) Erfinder: ANGERMEIER, Rüdiger, D-97222 Rimpar (DE); SCHRAUD, Ernst, D-97941 Tauberbischofsheim (DE)
(74) Vertreter: Tappe, Hartmut
(86) Internationale Anmeldenummer: DE0002874
(87) Internationale Veröffentlichungsnummer: WO01016625

(56) Entgegenhaltungen:
- EP-A- 0 504 413
- WO-A-95/06303
- WO-A-97/50252
- DE-A- 3 213 652
- JP-A- 6 292 204
- US-A- 5 563 650

## Beschreibung

Die vorliegende Erfindung betrifft ein Verfahren zur digitalen Bildbearbeitung nach dem Oberbegriff des Patentanspruchs 1 bzw. eine Bildaufnahme vorrichtung nach dem Oberbegriff des Anspruchs 2.

Bildverarbeitungsverfahren und Bildaufnahme vorrichtungen der eingangs genannten Art werden häufig zur Bilddatendokumentation von in der Realität bestehenden Zuständen verwendet. Dabei hat sich insbesondere betreffend die Abbildung und Speicherung von hinsichtlich in ihrer Ausdehnung begrenzten und im wesentlichen ebenen Flächen der Einsatz der bekannten Bildverarbeitungssysteme als unproblematisch erwiesen. Bedingt durch die optischen Abbildungsgesetze werden jedoch bei der Bildspeicherung von fotografischen Abbildungen, die zur Vergrößerung des Objektaufnahmebereichs mit einem Weitwinkelobjektiv aufgenommen wurden, nachträgliche Korrekturen notwendig, um die Abbildung maßstabsgetreu abzuspeichern. Darüber hinaus ist es je nach Größe des ausgewählten Objektaufnahmebereichs notwendig, mehrere, sich in Randbereichen einander überlappende Abbildungen zu erzeugen, um eine digitale Speicherung der dem ausgewählten Objektaufnahmebereich zugeordneten Bildpunkte zu ermöglichen. Insgesamt erweist sich daher die Transformation der digitalen Abbildungen in eine maßstabsgetreue Speicher-Bilddatei als äußerst komplex und fehlergefährdet.

Aus der WO97/50252 und der WO95/06303 sind Vorrichtungen zur Aufnahme von Panoramabildern bekannt, die den die Vorrichtung umgebenden Raum mit Hilfe eines Wölbspiegels auf eine Bildebene projizieren.

Die EP 0 504 413 A1 beschreibt eine Abbildungsvorrichtung zur Abbildung von kreisringförmigen Wandabschnitten eines Hohlraums mit Hilfe einer kegelstumpfförmigen Spiegelvorrichtung.

Des Weiteren ist zur Abbildung von kreisringförmigen Wandabschnitten eines Hohlraums eine Vorrichtung mit einem Linsensystem aus der DE 32 13 652 A1 bekannt. Das Linsensystem ist hier nur für die Abbildung des zylinderförmigen Gegenstandbereichs korrigiert.

Die bekannten Verfahren zur Abbildung von Hohlräumen weisen einen eingeschränkten Blickwinkel auf und resultieren in der Abbildung von kreisringförmigen, zur Hohlraumachse koaxialen Bildabschnitten. Profilschnittaufnahmen eines Hohlraums sind mit den bekannten Verfahren nicht möglich.

Der vorliegenden Erfindung liegt daher die Aufgabe zugrunde, unabhängig von der Größe des ausgewählten Objektaufnahmebereichs eine weitestgehend fehlerfreie Speicherung in eine Bilddatei zur maßstabsgetreuen Wiedergabe eines Hohlraumprofils zu ermöglichen.

Diese Aufgabe wird durch ein Bildbearbeitungsverfahren mit den Merkmalen des Anspruchs 1 und einer Bildaufnahmevorrichtung mit den Merkmalen des Anspruchs 2 gelöst.

Bei dem erfindungsgemäßen Verfahren zur digitalen Bildverarbeitung erfolgen die Verfahrensschritte:

Abbildung von Objektpunkten eines eine Abbildungseinrichtung umgebenden Raums auf einer Abbildungsfläche einer Bildaufnahmevorrichtung als Bildpunkte auf konzentrischen Bildpunktkreisen, und

Transformation der konzentrischen Bildpunktkreise in den einzelnen Bildpunktkreisen zugeordnete Bildpunktlinien zur Erzeugung einer Abwicklung des die Abbildungseinrichtung umgebenden Raums.

Die Abbildungsfläche wird parallel oder unter einem spitzen Winkel zur Hohlraumachse und die optische Achse des Abbildungssystems wird senkrecht oder unter einem Stumpfen Winkel jur Hohlraumachse angeordnet. Durch die einzelnen Bildpunkte eines konzentrischen Bildpunktkreises werden dabei Objektpunkte eines zugeordneten Profilschnitts des Hohlraums auf der Abbildungsfläche abgebildet.

Die Abbildung der Objektpunkte erfolgt durch Transmission der von den abzubildenden Objektpunkten ausgehenden Strahlen zumindest teilweise durch einen Trägerkörper einer Abbildungseinrichtung. Treffen die Strahlen auf eine Reflektionsfläche des Trägerkörpers, werden diese reflektiert, so dass die Objektpunkte als Bildpunkte auf eine Abbildungsfläche abgebildet werden. Dieser Ablenkungsvorgang kann beispielsweise mittels einer erfindungsgemäßen Bildaufnahmevorrichtung realisiert werden.

Bei der erfindungsgemäßen Bildaufnahmevorrichtung ist in einem auf die Abbildungsfläche auftreffenden Strahlengang vor der Abbildungseinrichtung eine Strahlablenkeinrichtung mit einer als Kegelmantel ausgebildeten Reflektionsfläche angeordnet. Die Symmetrieachse der Reflektionsfläche ist definiert zur optischen Achse der Bildaufnahme vorrichtung angeordnet und die Bildspeichereinrichtung des Bildverarbeitungssystems ist mit einer Transformationseinrichtung zur Transformation der von der Strahlenablenkeinrichtung auf der Abbildungsfläche erzeugten Kegelflächenprojektion in eine Bilddatei mit auf die Ebene projizierten Bildpunkten versehen.

Die Strahlablenkeinrichtung weist eine Trägereinrichtung auf, die zumindest mit einer als Reflektionsfläche ausgebildeten Oberfläche versehen ist. Bei Verwendung eines eigensteifen Reflektionsmaterials zur Ausbildung der Reflektionsfläche kann die Trägereinrichtung durch das Reflektionsmaterial selbst gebildet sein.

Die Trägereinrichtung besteht aus einem lichtdurchlässigen Körper, der zur Ausbildung der Reflektionsfläche mit einer halbdurchlässigen Spiegelfläche versehen ist. Hierbei dient der Körper zur Definition der Flächengestalt der Reflektionsfläche, so daß das Material zur Ausbildung der Reflektionsfläche allein nach seinen Reflektionseigenschaften ohne Berücksichtigung der mechanischen Eigenschaften des Reflektionsmaterials ausgewählt werden kann.

Mittels der Strahlablenkeinrichtung ist es möglich, auch rückwärtig zur Abbildungsfläche angeordnete Objekte bzw. Objektpunkte auf der Abbildungsfläche als Bildpunkt abzubilden. Daher kann bezogen auf eine definierte Position der Bildaufnahmevorrichtung bzw. der Abbildungsfläche ohne Änderung der Position oder der Anordnung der Abbildungsfläche im Raum eine im wesentlichen vollständige Abbildung des die Bildaufnahmevorrichtung umgebenden Raums auf der Abbildungsfläche erzeugt werden.

Zur Speicherung der Abbildung in einer Bilddatei ist eine Transformationseinrichtung vorgesehen, die die mittels der Reflektionsfläche der Strahlablenkeinrichtung auf der Abbildungsfläche erzeugte Kegelflächenprojektion in eine Ebenenprojektion überführt.

Hierdurch ermöglicht das Bildverarbeitungssystem insgesamt eine Bilddatei, in welcher der Raum, der die Bildaufnahmevorrichtung umgibt als ebene Abwicklung dargestellt ist.

Nachfolgend werden das erfindungsgemäße Verfahren sowie das dabei eingesetzte Bildverarbeitungssystem und Anwendungsfälle des Verfahrens unter Bezugnahme auf die Zeichnungen beispielhaft erläutert. Es zeigen:
- **Fig. 1**: in einer schematischen Darstellung die Funktion einer Strahlablenkeinrichtung zur Erzeugung einer Abbildung von Objektpunkten auf einer Abbildungsfläche;
- **Fig. 2**: in einer schematischen Darstellung die Abbildung von Objektpunkten als konzentrische Bildpunktkreise auf der Abbildungsfläche zur Erzeugung einer Kegelflächenprojektion;
- **Fig. 3**: in schematischer Darstellung die Bildpunkte einer durch Transformation entstandenen Bilddatei;
- **Fig. 4**: eine gegenüber der in **Fig. 1** dargestellten Strahlablenkeinrichtung variierte Ausführungsform der Strahlablenkeinrichtung;
- **Fig. 5**: die Anwendung des Verfahrens zur Erfassung und Speicherung eines Tunnelprofils;
- **Fig. 6**: die Anwendung des Verfahrens zur Erfassung und Speicherung eines Panoramas.

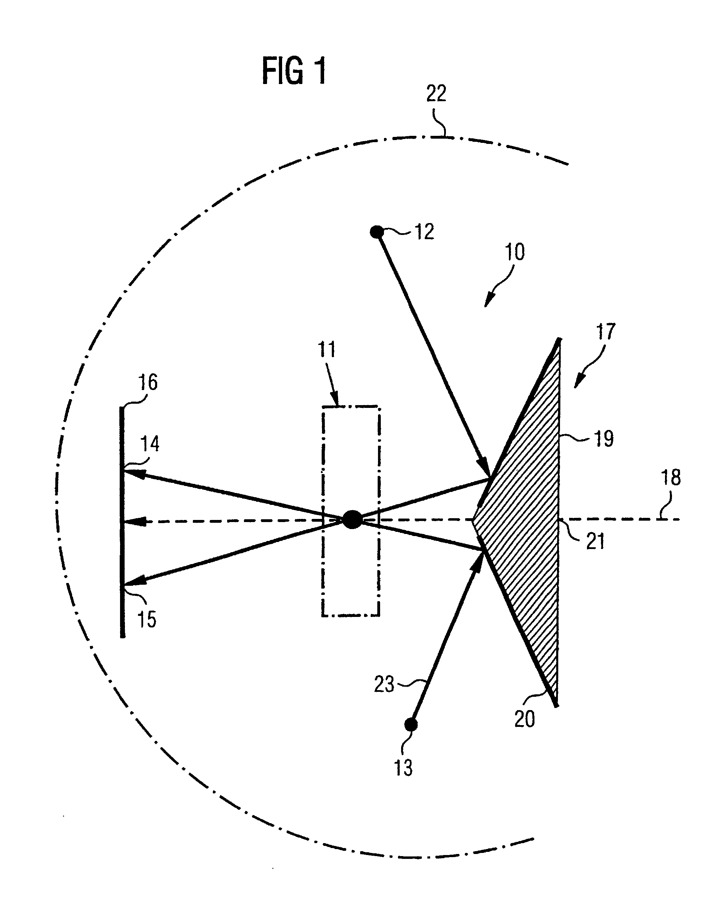

**Fig. 1** zeigt eine Bildaufnahmevorrichtung 10 mit einer hier als Objektivanordnung ausgebildeten Abbildungseinrichtung 11, die zur Abbildung von Objektpunkten 12, 13 aus einem die Bildaufnahmevorrichtung 10 umgebenden Raum als Bildpunkte 14, 15 auf einer Abbildungsfläche 16 der Bildaufnahmevorrichtung 10 dient.

Die Bildaufnahmevorrichtung 10 ist darüber hinaus mit einer Strahlablenkeinrichtung 17 versehen, die auf der optischen Achse 18 der Bildaufnahmevorrichtung 10 angeordnet ist. Die Strahlablenkeinrichtung 17 weist einen Trägerkörper 19 auf, der kegelförmig ausgebildet ist und dessen Kegelmantelfläche beispielsweise durch einen spiegelnden Oberflächenauftrag als Reflektionsfläche 20 ausgebildet ist. In dem in **Fig. 1** dargestellten Ausführungsbeispiel ist die Strahlablenkeinrichtung 17 derart auf der optischen Achse 18 angeordnet, daß die Symmetrieachse 21 der Reflexionsfläche 20 mit der optischen Achse 18 zusammenfällt.

Wie durch den in **Fig. 1** eingezeichneten Halbkreis 22 angedeutet werden soll, wird durch die der Abbildungseinrichtung 11 in einem optischen Strahlengang 23 vorgeordnete Strahlablenkeinrichtung 17 eine Abbildung einer Vielzahl von Objektpunkten 12, 13 aus einem die Bildaufnahmevorrichtung 10 umgebenden Halbraum auf der Abbildungsfläche 16 ermöglicht.

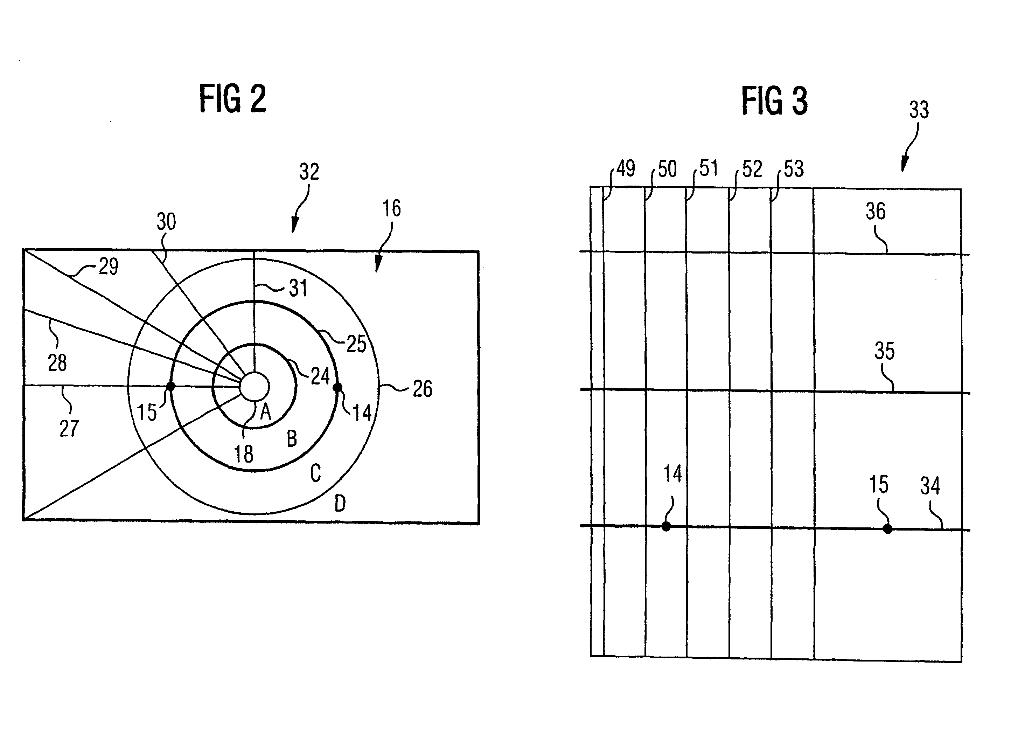

Aufgrund der kegelmantelförmig ausgebildeten Reflektionsfläche 20 der Strahlablenkeinrichtung 17 erfolgt die Abbildung der Objektpunkte 12, 13 auf der Abbildungsfläche 16, wie **Fig. 2** zeigt, in Form von konzentrisch um die optische Achse 18 angeordneten Bildpunktkreise 24, 25, 26. Im vorliegenden Fall sind die Objektpunkte 12, 13 als Bildpunkte 14 und 15 auf dem Bildpunktkreis 25 abgebildet. Ergänzend zu den Bildpunktkreisen 24, 25 und 26 sind in der Darstellung der Abbildungsfläche 16 gemäß **Fig. 2** radial zur optischen Achse 18 verlaufende Referenzlinien 27 bis 31 eingezeichnet, die lediglich zur besseren Erläuterung der nachfolgend unter Bezugnahme auf **Fig. 3** beschriebenen Transformation der Bildpunktkreise 24 bis 26 von einer auf der Abbildungsfläche 16 ausgebildeten Kegelmantelprojektion 32 in eine in **Fig. 3** dargestellte Ebenenprojektion 33 dienen.

Die Transformation in die in **Fig. 3** dargestellte Ebenenprojektion 33 erfolgt mittels einer hier nicht näher dargestellten Transformationseinrichtung, in der durch an sich geläufige mathematische Algorithmen die auf der Abbildungsfläche 16 ausgebildeten Bildpunktkreise 24 bis 26 in eine Bilddatei gespeicherte Bildpunktgeraden 34, 35 und 36 umgerechnet werden, bei denen die einzelnen Bildpunkte 14, 15 der Bildpunktkreise 24, 25 und 26 als jeweils zugeordnete Bildpunkte der entsprechenden Bildpunktgeraden 34, 35 und 36 definiert sind. Wie aus **Fig. 3** ferner ersichtlich ist, werden aus den radial angeordneten Referenzlinien 27 bis 31 infolge der in der Transformationseinrichtung stattfindenden Transformation Referenzparallelen 49 bis 53.

Aufgrund der Transformation der Kegelmantelprojektion 32 gemäß **Fig. 2** in die Ebenenprojektion 33 gemäß **Fig. 3** wird eine maßstabsgetreue Objektabbildung der in **Fig. 1** durch den Halbkreis 22 angedeuteten Objektumgebung möglich.

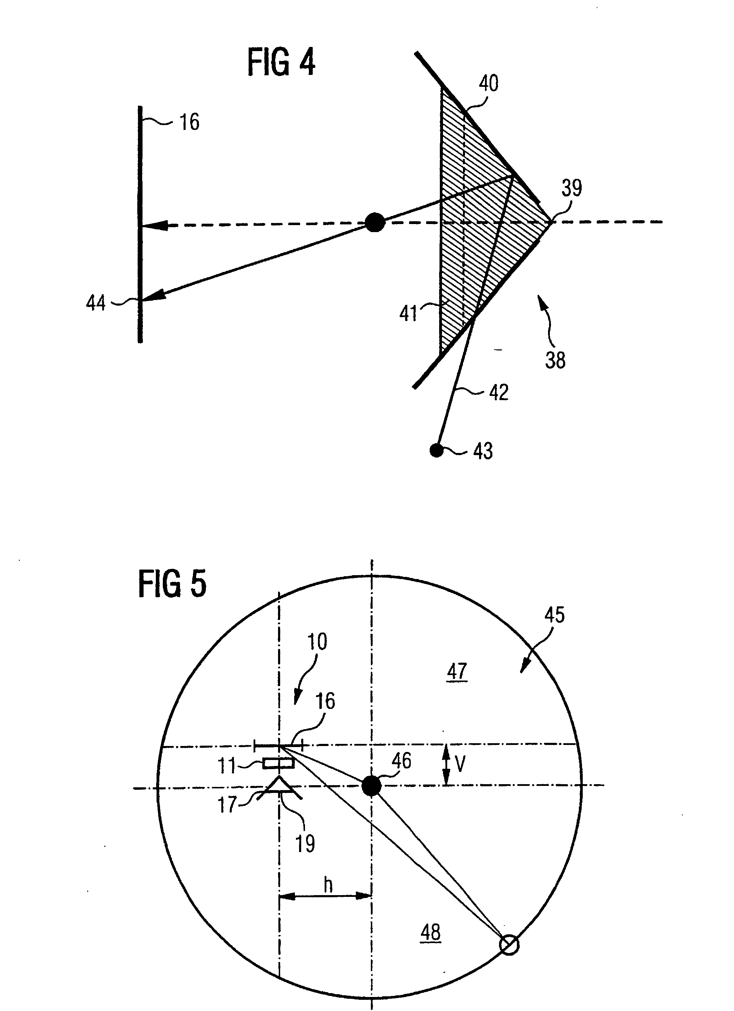

**Fig. 4** zeigt eine Variante in der Ausbildung einer Strahlablenkeinrichtung 38, wobei die Strahlablenkeinrichtung 38 gegenüber der Strahlablenkeinrichtung 17 eine um 180° gedreht angeordnete Symmetrieachse 39 aufweist, mit der Folge, daß die Strahlablenkeinrichtung 38 eine von der Abbildungsfläche 16 abgewandt angeordnete Reflektionsfläche 40 aufweist. Zur Ausbildung der in **Fig. 4** schematisch dargestellten Reflektionsfläche 40 ist auf die Kegelmantelfläche eines Trägerkörpers 41 ein semipermeabler Oberflächenauftrag aufgetragen, der einseitig, nämlich zum Trägerkörper 41 hin spiegelnd wirkt und von der anderen Seite her optisch durchlässig ist. Diese Wirkungsweise wird auch durch einen beispielhaft eingezeichneten Strahlengang 42 verdeutlicht, durch den ein Objektpunkt 43 als Bildpunkt 44 auf der Abbildungsfläche 16 abgebildet wird.

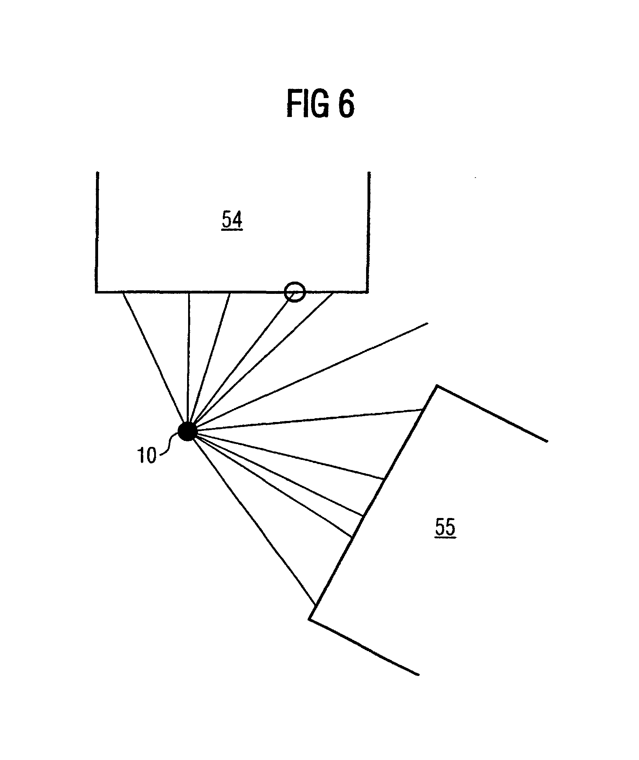

Anhand der **Fig. 5** und **6** sollen nachfolgend beispielhaft Anwendungen des anhand der vorstehend in Bezug genommenen Figuren erläuterten Verfahrens näher dargestellt werden:

**Fig. 5** dient zur Erläuterung der Anwendung des Verfahrens zur Durchführung von Hohlraumaufnahmen, wobei derartige Hohlräume beispielsweise als Tunnel oder Kaverne ausgebildet sein können. **Fig. 5** zeigt einen Querschnitt durch eine Tunnelröhre 45, wobei im vorliegenden Fall eine Bildaufnahmevorrichtung 10 exzentrisch bezogen auf eine Tunnelmittelachse 46 in der Tunnelröhre 45 angeordnet ist. Die Abbildungsfläche 16 der Bildaufnahmevorrichtung 10 befindet sich im vorliegenden Fall in einer zur Tunnelmittelachse 46 parallelen Ebene, deren Ebenennormale vertikal ausgerichtet ist. Die Bildaufnahmevorrichtung 10 verfügt darüber hinaus über eine Strahlablenkeinrichtung 17 der unter Bezugnahme auf **Fig.** 1 näher beschriebenen Art, wobei die Kegelmanteloberfläche des Trägerkörpers 19 wahlweise als Reflektionsfläche, wie unter Bezugnahme auf **Fig. 1** erläutert, oder als optisch durchlässige Fläche ausgebildet ist. Hierdurch wird es möglich, daß zum einen im Falle der Reflektionseigenschaft der Kegelmanteloberfläche ein rückwärtiger Halbraum 47 und im Falle der Transmissionseigenschaft der Kegelmanteloberfläche ein vorderer Halbraum 48 über die Abbildungseinrichtung 11 der Bildaufnahmevorrichtung 10 auf der Abbildungsfläche 16 abbildbar ist.

Wie aus **Fig. 5** ersichtlich, ist die Exzentrizität der Anordnung der Bildaufnahmevorrichtung 10 in der Tunnelröhre 45 definiert durch einen horizontalen Versatz h und einen Vertikalversatz v. Das vorstehend, insbesondere unter Bezugnahme auf die **Fig. 2** und **3** erläuterte Verfahren ermöglicht nunmehr eine nachträgliche Korrektur der Anordnung der Bildaufnahmevorrichtung 10 in der Tunnelröhre 45 durch mathematische Verlagerung der Anordnung der Bildaufnahmevorrichtung 10 in die Tunnelmittelachse 46. Basierend auf bekannten Koordinaten h und v der Exzentrizität der Anordnung der Bildaufnahmevorrichtung 10 bezogen auf die Tunnelmittelachse 46 können die entsprechenden Beträge bei der Transformation von der in **Fig. 2** dargestellten Kegelmantelprojektion 32 in die in **Fig. 3** dargestellte Ebenenprojektion 33 berücksichtigt werden, so daß quasi nach Rückrechnung der Anordnung der Bildaufnahmevorrichtung 10 in die Tunnelmittelachse 46 durch die Bilddatei letztendlich eine Objektabbildung definierbar ist, die der Objektabbildung bei Anordnung der Bildaufnahmevorrichtung 10 auf der Tunnelmittelachse 46 entspricht.

Genauso ist es möglich, basierend auf eine Mittelpunktanordnung, also beispielsweise eine Anordnung der Bildaufnahmevorrichtung 10 auf der Tunnelmittelachse 46 bei dem vorliegenden Ausführungsbeispiel, die Position der Bildaufnahmevorrichtung 10 in beliebig hiervon abweichende Positionen umzurechnen.

Dies erweist sich insbesondere bei der in **Fig. 6** schematisch dargestellten Anwendung des Verfahrens als vorteilhaft. Bei dieser Applikation befindet sich im Unterschied zu der in **Fig. 5** beispielhaft erläuterten Applikation die Abbildungsfläche der Bildaufnahmevorrichtung 10 vertikal angeordnet, derart, daß die Flächennormale auf die Abbildungsfläche horizontal ausgerichtet ist. Bei bekannter Anordnung der Bildaufnahmevorrichtung 10 gegenüber in der Umgebung angeordneten Objekten 54, 55, bei denen es sich im vorliegenden Fall um Gebäude handelt, können so durch entsprechende Transformation der in **Fig. 2** dargestellten Kegelmantelprojektion 32 in die in **Fig. 3** dargestellte Ebenenprojektion 33 beliebige Blickwinkel oder Perspektiven simuliert werden.

## Patentansprüche

1. Verfahren zur digitalen Bildbearbeitung mit den Verfahrensschritten:
- Abbildung von Objektpunkten (43) eines eine Abbildungseinrichtung (11) umgebenden Raumes auf einer Abbildungsfläche (16) einer Bildaufnahmevorrichtung (10) als Bildpunkte (14, 15) auf konzentrischen Bildpunktkreisen (24 bis 26),
- Transformation der konzentrischen Bildpunktkreise (24 bis 26) in den einzelnen Bildpunktkreisen zugeordnete Bildpunktgeraden (34 bis 36) zur Erzeugung einer Abwicklung des die Abbildungseinrichtung (11) umgebenden Raumes,
**dadurch gekennzeichnet,**
**dass** eine Transmission der von den abzubildenden Objektpunkten (43) ausgehenden Strahlen in einen kegelförmigen und lichtdurchlässigen Trägerkörper (41) einer Strahlablenkeinrichtung (38) und eine Reflektion der auf eine Reflektionsfläche (40) des Trägerkörpers (41) auftreffenden Strahlen (42) an der Reflektionsfläche (40) der Strahlablenkeinrichtung stattfindet, wobei die Reflexionsfläche als eine halbdurchlässige Spiegelfläche ausgebildet ist, die zum Trägerkörper hin spiegelnd wirkt und wobei die Kegelspitze der Strahlablenk einrichtung von der Abbildungsfläche abgewandt ist, und dass zur Erfassung und Speicherung eines Hohlraumprofils die Abbildungsfläche (16) parallel oder unter einem spitzen Winkel zur Hohlraumachse (46) und gleichzeitig die optische Achse der Abbildungseinrichtung senkrecht oder unter einem stumpfen Winkel zur Hohlraumachse angeordnet ist, derart, dass durch die einzelnen Bildpunkte (14, 15) eines konzentrischen Bildpunktkreises (24 bis 26) Objektpunkte (12, 13) eines Profilschnittes des Hohlraumes auf der Abbildungsfläche (16) abgebildet werden.

2. Bildaufnahmevorrichtung zur Durchführung eines Verfahrens nach Anspruch 1 mit einer Abbildungseinrichtung (11) und einer Abbildungsfläche (16) sowie einer digitalen Bildspeichereinrichtung, wobei in einem auf die Abbildungsfläche (16) auftreffenden Strahlengang (42) vor der Abbildungseinrichtung (11) eine Strahlablenkeinrichtung (38) mit einer als Kegelmantel ausgebildeten Reflektionsfläche (40) angeordnet ist, deren Symmetrieachse (39) definiert zur optischen Achse (18) der Bildaufnahmevorrichtung (10) angeordnet ist, und die Bildspeichereinrichtung mit einer Transformationseinrichtung zur Transformation der von der Strahlablenkeinrichtung (38) auf der Abbildungsfläche (16) erzeugten Kegelflächenprojektion (32) in eine Bilddatei mit auf die Ebene projizierten Bildpunkten versehen ist, wobei die Strahlablenkeinrichtung (38) eine Trägereinrichtung (41) aufweist, die mit einer als Kegelmantel ausgebildeten Reflektionsfläche (40) versehen ist, welche mit ihrer Symmetrieachse (39) unter einem definierten Winkel zur optischen Achse (18) der Abbildungseinrichtung angeordnet ist,
**dadurch gekennzeichnet,**
**dass** die Trägereinrichtung (41) als lichtdurchlässiger Trägerkörper, und die Reflektionsfläche (40) als eine halbdurchlässige Spiegelfläche ausgebildet ist, die zum Trägerkörper hin spiegelnd wirkt, wobei die Kegelspitze der Strahlablenkeinrichtung von der Abbildungsfläche abgewandt ist.

## Claims

1. Method for digital image processing, the method having the method steps:
- imaging of object points (43) of a space surrounding an imaging device (11) on an imaging surface (16) of an image-recording device (10) as image points (14, 15) on concentric image point circles (24 to 26),
- transformation of the concentric image point circles (24 to 26) into image point straight lines (34 to 36) associated with the individual image point circles in order to generate a development of the space surrounding the imaging device (11),
**characterised in that** a transmission of the beams originating from the object points (43) to be imaged takes place in a conical and light-permeable carrier body (41) of a beam deviation device (38) and a reflection of the beams (42) striking a reflecting surface (40) of the carrier body (41) takes place on the reflecting surface (40) of the beam deviation device, with the reflecting surface being formed as a semipermeable mirror surface that acts in a mirror-like manner towards the carrier body and with the cone apex of the beam deviation device facing away from the imaging surface, and **in that** in order to detect and store a hollow-space profile the imaging surface (16) is arranged parallel to or at an acute angle to the hollow-space axis (46) and at the same time the optical axis of the imaging device is arranged so as to be perpendicular to or at an obtuse angle to the hollow-space axis in such a way that object points (12, 13) of a profile section of the hollow space are imaged on the imaging surface (16) by means of the individual image points (14, 15) of a concentric image point circle (24 to 26).

2. Image-recording device for carrying out a method according to claim 1 having an imaging device (11) and an imaging surface (16) and also a digital image storing device, with there being arranged before the imaging device (11), in a beam path (42) striking the imaging surface (16), a beam deviation device (38) that has a reflecting surface (40) which is formed as a cone envelope and the axis of symmetry (39) of which is arranged in a defined manner in relation to the optical axis (18) of the image recording device (10), and with the image storing device being provided with a transformation device for transforming the cone-surface projection (32), produced on the imaging surface (16) by the beam deviation device (38), into an image file with image points projected onto the plane, with the beam deviation device (38) having a carrier device (41) provided with a reflecting surface (40) which is formed as a cone envelope and is arranged with its axis of symmetry (39) at a defined angle in relation to the optical axis (18) of the imaging device,
**characterised in that** the carrier device (41) is formed as a light-permeable carrier body, and the reflecting surface (40) is formed as a semipermeable mirror surface that acts in a mirror-like manner towards the carrier body, with the cone apex of the beam deviation device facing away from the imaging surface.

## Revendications

1. Procédé de traitement numérique d'images comprenant les étapes de procédé suivantes :
• reproduction de points d'objet (43) d'un espace entourant un dispositif de reproduction (11) sur une surface de reproduction (16) d'un dispositif d'acquisition d'image (10) sous forme de points d'image (14, 15) sur des cercles concentriques de points d'images (24 à 26) ;
• transformation des cercles concentriques de points d'images (de 24 à 26) en lignes de points d'images (34 à 36) associées aux différents cercles de points d'images pour générer une projection développée de l'espace entourant le dispositif de reproduction (11),
**caractérisé en ce qu'**une transmission des faisceaux provenant des points d'objet (43) à reproduire s'effectue dans un support (41) conique transparent d'un dispositif de déviation de faisceau (38) et une réflexion des faisceaux (42) arrivant sur une surface de réflexion (40) du support (41) s'effectue sur la surface de réflexion (40) du dispositif de déviation de faisceau, cette surface de réflexion se présentant sous forme d'une surface de miroir semi transparente agissant par réflexion vers le support, le sommet du cône du dispositif de déviation de faisceau étant opposé à la surface de reproduction, et **en ce que**, afin d'assurer la saisie et le stockage d'un profil de cavité, la surface de reproduction (16) est disposée parallèlement à l'axe de la cavité (46) ou forme un angle aigu avec cet axe et simultanément l'axe optique du dispositif de reproduction est disposé perpendiculairement à l'axe de la cavité ou forme un angle obtus avec cet axe, de telle sorte que, grâce aux différents points d'image (14, 15) d'un cercle concentrique de points d'images (24 à 26), les points d'objet (12, 13) d'une coupe de profil de la cavité sont reproduits sur la surface de reproduction (16).

2. Dispositif d'acquisition d'image pour l'exécution d'un procédé selon la revendication 1 à l'aide d'un dispositif de reproduction (11) et une surface de reproduction (16) ainsi qu'à l'aide d'un dispositif numérique de stockage d'images, pour lequel, un dispositif de déviation de faisceau (38) avec une surface de réflexion (40) sous forme de nappe de cône est placé dans un trajet de faisceau (42) arrivant sur la surface de reproduction (16) avant le dispositif de reproduction (11), surface de réflexion dont l'axe de symétrie (39) est placé de manière définie par rapport à l'axe optique (18) du dispositif d'acquisition d'image (10) et le dispositif de stockage des images étant équipé d'un dispositif de transformation permettant de transformer la projection de la surface conique (32) produite sur la surface de reproduction (16) par le dispositif de déviation de faisceau (38) en fichier d'images comprenant des points d'image projetés sur le plan, le dispositif de déviation de faisceau (38) présentant un dispositif de support (41) pourvu d'une surface de réflexion (40) sous forme d'une nappe de cône et placée, avec son axe de symétrie (39), en formant un angle défini par rapport à l'axe optique (18) du dispositif de reproduction, **caractérisé en ce que**
le dispositif de support (41) est un support transparent et la surface de réflexion (40) est une surface de miroir semi transparente, agissant par réflexion vers le support, le sommet du cône du dispositif de déviation de faisceau étant opposé à la surface de reproduction.
